# EUROPEAN PATENT SPECIFICATION

(11) **EP 1 997 824 B1**
(45) Date of publication and mention of the grant of the patent: **22.02.2012**
(21) Application number: 08009728.0
(22) Date of filing: 28.05.2008
(51) Int. Cl.: C07F 7/18, C09D 5/16

(54) **Perfluoropolyether-modified aminosilane, surface treating agent, and aminosilane-coated article**
Perfluorpolyethermodifiziertes Aminosilan, Oberflächenbehandlungsmittel und mit Aminosilan beschichteter Artikel
Aminosilane modifiée de perfluoropolyéther, agent de traitement de surface, et article à revêtement d'aminosilane

(30) Priority: 01.06.2007 JP 2007146910
(43) Date of publication of application: 03.12.2008
(73) Proprietor: Shin-Etsu Chemical Co., Ltd., Chiyoda-ku, Tokyo (JP)
(72) Inventor: Yamaguchi, Koichi, Annaka-shi, Gunma-ken, (JP); Kishita, Hirofumi, Annaka-shi, Gunma-ken, (JP)
(74) Representative: Merkle, Gebhard

(56) References cited:
- EP-A- 1 059 320
- EP-A- 1 103 581
- EP-A- 1 923 434
- WO-A-2006/074079
- JP-A- 11 029 585
- JP-A- 58 122 979
- JP-A- 58 167 597
- US-A1- 2002 071 959
- FISHMAN V N ET AL: "Tris (perfluoroalkylethyl)silyl alkyl amines as calibration standards for electron ionization mass spectrometry in the mass range of 100-3000 Da" JOURNAL OF THE AMERICAN SOCIETY FOR MASS SPECTROMETRY, vol. 12, no. 9, September 2001 (2001-09), pages 1050-1054, XP004300774 ISSN: 1044-0305

## Description

### TECHNICAL FIELD

This invention relates to a novel perfluoropolyether-modified aminosilane which cures into a film having improved water and oil repellency, parting and anti-staining properties, a surface treating agent comprising the aminosilane, and an article with a cured coating of the aminosilane.

### BACKGROUND OF THE INVENTION

In general, perfluoropolyether-containing compounds have water and oil repellency, chemical resistance, lubricity, parting properties and anti-staining properties because of their very low surface energy. For the effective utilization of such properties, these compounds are widely used in the industry as water/oil repellent anti-staining agents for paper and textile, lubricants in magnetic recording media, oil repellants in precision machines, parting agents, cosmetics, and protective coatings.

The perfluoropolyether-containing compounds must be diluted with solvents before they can be applied to substrates. Where their characteristic properties including water and oil repellency, chemical resistance, lubricity, parting and anti-staining properties are required at a higher level, the compounds must, as a matter of course, have a higher fluorine content per molecule. From the solubility aspect, the solvents with which they can be diluted are limited to fluorochemical solvents. However, the fluorochemical solvents are expensive and can adversely affect the environment when allowed to diffuse into air.

The same properties indicate that the perfluoropolyether-containing compounds are non-tacky and non-adherent to other substrates. They are applicable to the substrate surface, but cannot form a coating firmly bonded to the substrate.

Silane coupling agents are well known as the means for establishing a firm bond between a substrate surface such as glass or fabric and an organic compound. The silane coupling agent has an organic functional radical and a reactive silyl radical (typically alkoxysilyl radical) in a molecule. The alkoxysilyl radical undergoes self-condensation reaction with air-borne moisture, converting to a siloxane to form a coating. At the same time, the silane coupling agent forms chemical and physical bonds with the surface of glass or metal, resulting in a durable tough coating. By virtue of these advantages, the silane coupling agent is widely used as a coating agent to a variety of substrates.

EP 1 103 581 A2 discloses a pigment that has been surface-treated with a perfluoropolyether group-bearing silane coupling agent having excellent water and oil repellency, adhesion, and color extension by color pigments.

As one typical example taking advantage of the above features, JP-A 58-167597 discloses fluoroaminosilane compounds of the following formula (8): 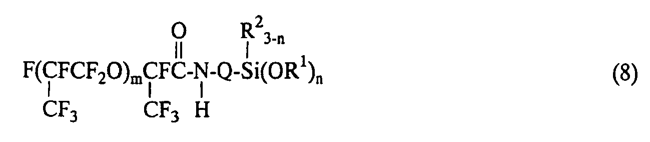 wherein R¹ and R² are C₁₋₄ alkyl, Q is CH₂CH₂CH₂ or CH₂CH₂NHCH₂CH₂CH_{2'} m is an integer of 1 to 4, and n is equal to 2 or 3. While these compounds can be diluted with common solvents, they are not regarded satisfactory in the ability to form a coat partially because the content (wt%) of hydrolyzable radicals per molecule is low and consequently, curing takes a time.

To solve these problems, the inventors previously proposed in USP 6,200,684 or JP Pat. 3601580 a perfluoropolyether-modified aminosilane of the formula (3): 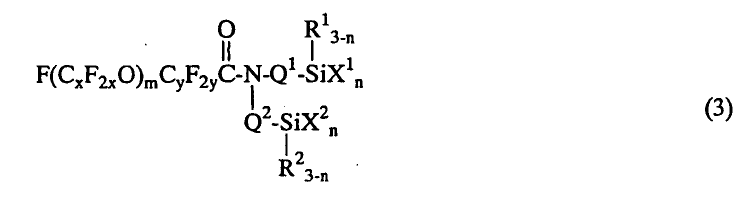 wherein X¹ and X² each are a hydrolyzable radical, R¹ and R² each are a lower alkyl radical, Q¹ and Q² each are a divalent organic radical, m is an integer of 6 to 50, n is equal to 2 or 3, x and y each are an integer of 1 to 3. This perfluoropolyether-modified aminosilane has good water and oil repellency, anti-staining properties, chemical resistance, lubricity, and parting properties. Because of two hydrolyzable silyl radicals per molecule, its reactivity is improved over the prior art aminosilanes, typically the fluoroaminosilane compounds of formula (8). It can be utilized as a surface treating agent to be coated to the surface of various substrates. This perfluoropolyether-modified aminosilane, however, has a high fluorine content per molecule, which gives rise to a problem that when the aminosilane is diluted with a solvent so that it may be applied to substrates, the solvent is limited to fluorochemical solvents from the solubility aspect. Thus this aminosilane is not regarded as fulfilling an ability of treatment and coating.

Since many tall buildings are constructed in the recent decades, the demand for the technology for imparting "stain resistance" or "ease of stain removal" for keeping glazing maintenance-free is increasing. There is a desire to have a material meeting such a demand.

### SUMMARY OF THE INVENTION

An object of the invention is to provide a perfluoropolyether-modified aminosilane which can be diluted with common solvents and form a coating firmly bonded to substrate surface. Another object is to provide a surface treating agent comprising the aminosilane, having improved water and oil repellency and parting properties, and an article having a cured coating of the aminosilane.

We have found that a novel perfluoropolyether-modified aminosilane of the following formula (1) has the necessary minimum fluorine content for the compound to exert water and oil repellency, anti-staining, chemical resistance, lubricity, and parting properties, and can be used as a surface treating agent to be coated to the surface of various substrates. This aminosilane can be diluted with common solvents such as alcohols, eliminating a need for fluorochemical solvents for dilution. A cured coating of the aminosilane is in firm bond to the substrate so that it may sustain the effects over a long period of time.

In one aspect, the invention provides a perfluoropolyether-modified aminosilane having the following formula (1): 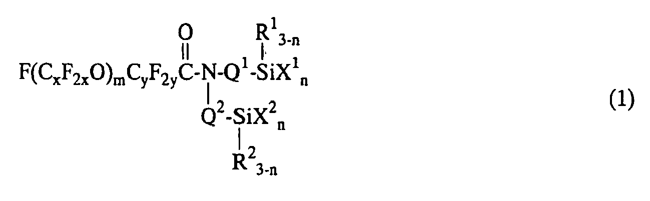 wherein X¹ and X² R¹ and R², Q¹ and Q², m, n, x and y are defined as in claim 1.

In another aspect, the invention provides a surface treating agent comprising the perfluoropolyether-modified aminosilane of formula (1) and/or a partial hydrolytic condensate thereof as an active ingredient, which is dissolved in a polar solvent. Also contemplated herein is an article having a cured coating comprising the perfluoropolyether-modified aminosilane and/or a partial hydrolytic condensate thereof.

It is noted that the perfluoropolyether-modified aminosilane of formula (1) as the active ingredient of the surface treating agent contains an amide bond. The amide bond is known effective for efficient orientation of modifying fluoride radicals to the substrate surface. In this regard too, the surface treating agent of the invention is improved over the prior art agents.

### BENEFITS OF THE INVENTION

The perfluoropolyether-modified aminosilane of the invention can be diluted with common solvents and form a coating firmly bonded to substrate surface. The cured coating has improved water and oil repellency, parting, anti-staining, and weathering properties.

### BRIEF DESCRIPTION OF THE DRAWINGS

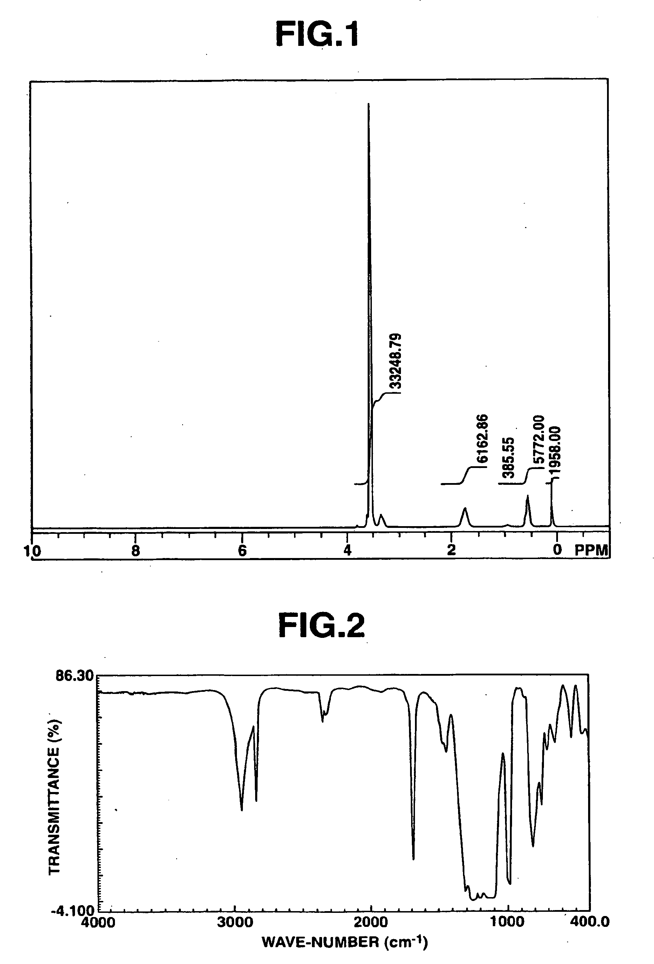

FIGS. 1 and 2 show ¹H-NMR and IR spectra of the aminosilane synthesized in Synthesis Example 1, respectively.

### DESCRIPTION OF THE PREFERRED EMBODIMENTS

The perfluoropolyether-modified aminosilane of the invention has the formula (1). 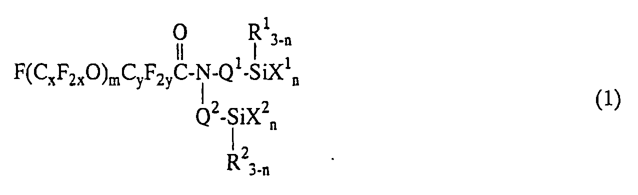 Herein X¹ and X², R¹ and R² Q¹ and Q² m, n, x and y are defined as in claim 1..

More particularly, X¹ and X² stand for hydrolyzable radicals and may be the same or different. X¹ and X² are selected from the group consisting of alkoxy radicals of 1 to 4 carbon atoms such as methoxy, ethoxy, propoxy and butoxy, oxyalkoxy radicals of 2 to 4 carbon atoms such as methoxymethoxy and methoxyethoxy, acyloxy radicals of 2 to 4 carbon atoms such as acetoxy, alkenyloxy radicals of 2 to 4 carbon atoms such as isopropenoxy, and halogen radicals such as chloro, bromo and iodo. Of these, methoxy, ethoxy, isopropenoxy and chloro are preferred.

R¹ and R² stand for alkyl radicals of 1 to 6 carbon atoms or phenyl radicals and may be the same or different. Exemplary radicals include methyl, ethyl and phenyl, with methyl being most preferred.

Q¹ and Q² stand for divalent organic alkylene radicals of 1 to 5 carbon atoms and may be the same or different. Inter alia, alkylene radicals of 1 to 5 carbon atoms which may contain a nitrogen atom such as CH₂CH₂CH₂ and CH₂CH₂NHCH₂CH₂CH₂ are preferred.

The letter m is an integer of 3 to 5. With m below the range, the characteristics of perfluoropolyether radicals are not fully exerted. With m beyond the range, the proportion of perfluoropolyether radicals in the overall molecule becomes large, which is undesirable for solubility in common solvents. A value of m equal to 4 or 5 is most desirable for a good balance between function development and solubility. The letter n is either 2 or 3. A plurality of n's may be identical or different. A mixture of n=2 and n=3 may be used.

For the aminosilane, it is preferred that the perfluoropolyether moiety represented by F(CₓF₂ₓO)ₘC_{y}F_{2y} have the following formula (2): 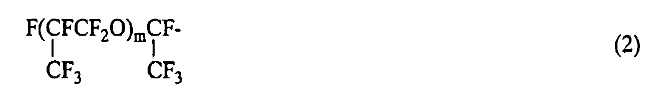 wherein m is as defined above. It is also preferred that the hydrolyzable radicals represented by X¹ and X² be alkoxy radicals.

The perfluoropolyether-modified aminosilane of the invention may be prepared, for example, by effecting hydrosilylation reaction between a diallylamide derivative of a corresponding hexafluoropropylene oxide (HFPO) oligomer and a corresponding hydroxysilane.

In the second aspect of the invention, the surface treating agent contains the perfluoropolyether-modified aminosilane of formula (1) and/or a partial hydrolytic condensate thereof as an active ingredient.

If necessary, a hydrolytic condensation catalyst may be added to the surface treating agent. Exemplary catalysts include organic tin compounds (e.g. dibutyltin dimethoxide and dibutyltin dilaurate), organic titanium compounds (e.g., tetra-n-butyl titanate), organic acids (e.g., acetic acid and methanesulfonic acid), and mineral acids (e.g., hydrochloric acid and sulfuric acid). Of these, acetic acid, tetra-n-butyl titanate and dibutyltin dilaurate are desirable. The catalyst is added in a catalytic amount, preferably 0.001 to 5 parts by weight, and more preferably 0.01 to 1 part by weight, per 100 parts by weight of the aminosilane and/or partial hydrolytic condensate thereof.

The surface treating agent of the invention may be diluted with a suitable solvent. Exemplary solvents include alcohols (e.g., ethyl alcohol and isopropyl alcohol), hydrocarbon solvents (e.g., petroleum benzine, mineral spirits, toluene and xylene), ester solvents (e.g., ethyl acetate, isopropyl acetate and butyl acetate), ether solvents (e.g., diethyl ether and isopropyl ether), and ketone solvents (e.g., acetone, methyl ethyl ketone and methyl isobutyl ketone). Polar solvents including alcohols, esters, ethers and ketones are preferred. Inter alia, isopropyl alcohol and methyl isobutyl ketone are especially preferred for solubility, wettability, and safety.

The solvents may be used alone or in admixture while those solvents in which the foregoing components are uniformly dissolvable are preferred. The amount of solvent used is not particularly limited. Preferably the solvent is used in such amounts that the resulting surface treating agent contains 0.001 to 10% by weight, and more preferably 0.01 to 5% by weight of solids although the optimum concentration depends on a particular treating technique.

The surface treating agent thus obtained may be applied (differently stated, a substrate may be treated with the agent) by well-known techniques such as brush coating, dipping, spraying and evaporation. The optimum treating temperature varies with a particular treating technique, although a temperature from room temperature to about 120°C is desirable when the agent is applied by brush coating or dipping. The application or treatment is desirably carried out under humidified conditions because humidity promotes the reaction. It is understood that appropriate treating conditions are selected on every application because the treating conditions vary depending on a particular silane compound and additives used.

The substrate to be treated with the surface treating agent is not particularly limited. Various materials including paper, fabric, metals, metal oxides, glass, plastics, porcelain, and ceramics may be used as the substrate. More particularly, substrates of paper, fabric, metals, glass, plastics, ceramics, etc. are included when the surface treating agent is used as water and oil repellant; substrates for pressure-sensitive adhesive tape, resin molding molds, rolls, etc. are included when the surface treating agent is used as parting agent; and substrates of paper, fabric, metals, glass, plastics, ceramics, etc. are included when the surface treating agent is used as anti-staining agent. The surface treating agent may also be used for modifying the flow and dispersion of paint additives, resin modifiers, and inorganic fillers, and for improving lubricity on tape, film and the like.

The cured coating formed on the surface of substrates or articles has a thickness which may be selected depending on the type of substrate.

Illustrative applications of the surface treating agent include water repellent, anti-staining coatings on sanitary ware such as bathtubs and washbowls; anti-staining coatings on glazing and head lamp covers in transport vehicles such as automobiles, trains and aircraft; water repellent, anti-staining coatings on building exteriors; coatings for preventing oil contamination on kitchen ware; water/oil repellent, anti-staining, weather resistant, anti-sticking coatings in telephone booths; and water and oil repellent, anti-fingerprint coatings on artistic objects; and anti-staining coatings on glassware and glass members in the general industry.

### EXAMPLE

Examples of the invention are given below by way of illustration and not by way of limitation.

### Synthesis Example 1

A 200-ml three-neck flask equipped with a thermometer, reflux condenser and stirrer was charged with 112 g of a perfluoropolyether-modified diallyldiamide of formula (4), 50 g of m-xylene hexafluoride, and 0.86 g of a toluene solution of chloroplatinic acid/vinyl siloxane complex (containing 1.0×10⁻⁶ mol of elemental Pt). 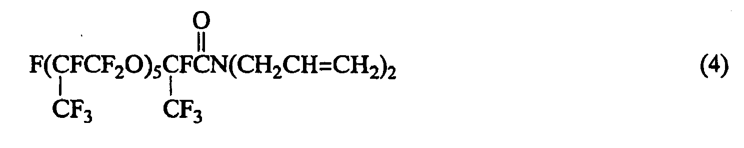 The contents were heated at 80°C with stirring. Then 26.8 g of trimethoxysilane was added dropwise to the reaction solution, which was ripened for 3 hours at 85°C. After the disappearance of allyl radicals in the reactant was ascertained by ¹H-NMR, the solvent and the excess trimethoxysilane were distilled off in vacuum, yielding 131.6 g of a colorless clear liquid. The data of ¹H-NMR and IR spectroscopy of the compound are shown below.
¹H-NMR (TMS standard, ppm, see FIG. 1)

| | |
|---|---|
| -CH₂CH₂Si≡ | 0.5-0.6 |
| -CH₂CH₂CH₂- | 1.7-1.9 |
| -CONCH₂CH₂- | 3.2-3.4 |
| -Si(OCH₃)₃ | 3.4-3.6 |

IR (KBr plate, liquid-membrane method, cm⁻¹, see FIG. 2)
2950-2850 (C-H)
1700 (CON)
1315-1090 (C-F)

From the above data, the compound was identified to have the structural formula below.

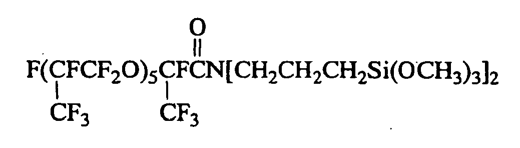

### Synthesis Example 2

This example followed the same procedure as Synthetic Example 1 except that a compound of formula (5): 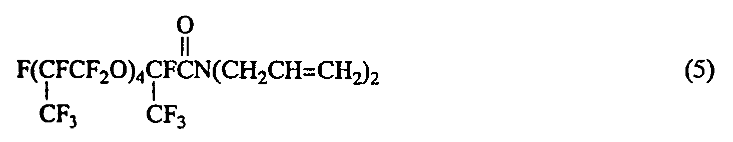 was used instead of the perfluoropolyether-modified diallyldiamide of formula (4). There was obtained a compound of the formula shown below.

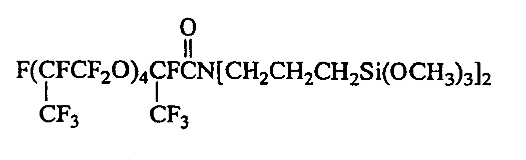

### Synthesis Example 3

This example followed the same procedure as Synthetic Example 1 except that a compound of formula (6): 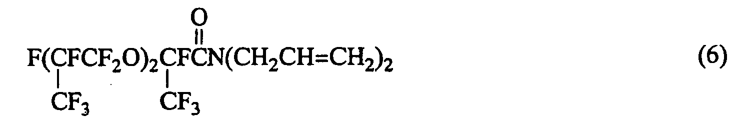 was used instead of the perfluoropolyether-modified diallyldiamide of formula (4). There was obtained a compound of the formula shown below.

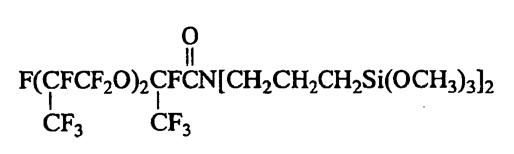

### Synthesis Example 4

This example followed the same procedure as Synthetic Example 1 except that a compound of formula (7): 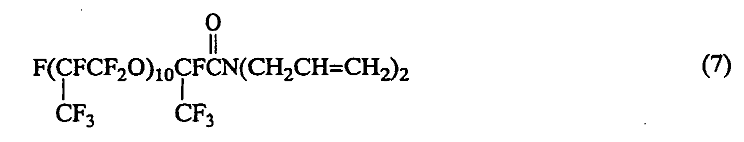 was used instead of the perfluoropolyether-modified diallyldiamide of formula (4). There was obtained a compound of the formula shown below.

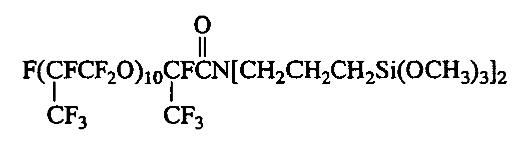

### Examples 1 and 2

In 97.0 g of isopropyl alcohol was dissolved 3.0 g of the perfluoropolyether-modified aminosilane synthesized in each of Synthetic Examples 1 and 2. The solution was brush coated onto a glass plate of 2.5 x 10 x 0.5 cm, and allowed to stand for one hour in an atmosphere at 25°C and humidity 70% whereby the coating cured. This test specimen was examined by the following tests.

### (1) Water and oil repellent test

Using a contact angle meter model A3 (Kyowa Interface Science Co., Ltd.), the contact angle of the cured coating with water and n-hexadecane was measured as the rating of water and oil repellency.

### (2) Parting test

A Cellophane adhesive tape strip (25 mm wide) was attached to the surface of the cured coating. Using a tensile tester, the tape strip was pulled and peeled at an angle of 180° and a rate of 300 mm/min. The force required for peeling was measured as the rating of parting property.

### (3) Durability test

The surface of the cured coating was wiped 30 strokes with cellulose non-woven fabric under a predetermined load. Thereafter, the contact angle with water was measured as in test (1), from which durability was evaluated.

### (4) Solubility

Whether the aminosilane was soluble in isopropyl alcohol was examined at a solids concentration of 3% by weight.

The results of these tests (1) to (4) are shown in Table 1.

### Comparative Examples 1 and 2

Cured coatings were obtained and tested as in Examples 1 and 2 except that the fluoroaminosilanes of Synthesis Examples 3 and 4 were used instead of the fluoroaminosilanes of Synthesis Examples 1 and 2. The test results are also shown in Table 1.

### Comparative Example 3

A cured coating was obtained and tested as in Examples 1 and 2 except that heptadecatrifluorodecyltrimethoxysilane (KBM-7803, Shin-Etsu Chemical Co., Ltd.) was used instead of the fluoroaminosilanes of Synthesis Examples 1 and 2. The test results are also shown in Table 1.

**Table 1**

| | Water and oil repellency (deg) | | Parting (g/25 mm) | Durability (deg) | Solubility |
|---|---|---|---|---|---|
| | Water | n-hexadecane | | | |
| Example 1 | 114 | 72 | 22 | 113 | Uniform, clear |
| Example 2 | 113 | 70 | 25 | 111 | Uniform, clear |
| Comparative Example 1 | 101 | 63 | 98 | 97 | Uniform, clear |
| Comparative Example 2 | - | - | - | - | White turbid |
| Comparative Example 3 | 114 | 73 | 131 | 83 | Uniform, clear |

The coatings of Examples show at least equivalent water and oil repellency and parting property and are improved in solubility and durability, as compared with the prior art coatings (Comparative Examples 2 and 3). The coating of Comparative Example 1 is inferior in water and oil repellency and parting property to the coatings of Examples and unacceptable on practical use.

It is thus evident that the perfluoropolyether-modified aminosilanes of the invention may be diluted with common solvents and form a tough coating on a substrate surface. They are applicable as a surface treating agent having improved water and oil repellency and parting property.

## Claims

1. A perfluoropolyether-modified aminosilane having the following formula (1): 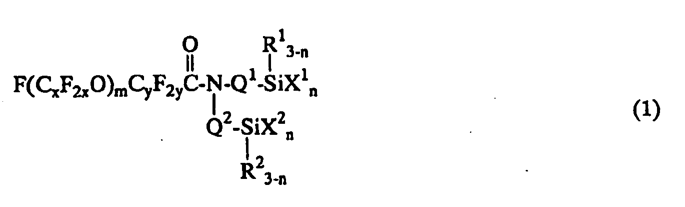 wherein X¹ and X² each are a hydrolyzable radical selected from the group consisting of alkoxy radicals of 1 to 4 carbon atoms, oxyalkoxy radicals of 2 to 4 carbon atoms, acyloxy radicals of 2 to 4 carbon atoms, alkenyloxy radicals of 2 to 4 carbon atoms, and halogen radicals, R¹ and R² each are an alkyl radical of 1 to 6 carbon atoms or phenyl radical, Q¹ and Q² each are a divalent organic alkylene radical of 1 to 5 carbon atoms, m is an integer of 3 to 5, n is equal to 2 or 3, x and y each are an integer of 1 to 3.

2. The perfluoropolyether-modified aminosilane of claim 1 wherein the perfluoropolyether moiety has the following formula (2): 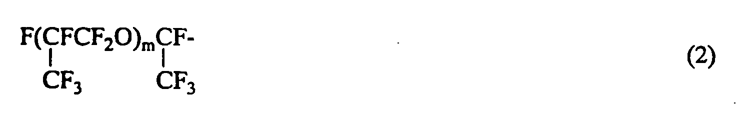 wherein m is as defined above.

3. The perfluoropolyether-modified aminosilane of claim 1 or 2 wherein the hydrolyzable radicals represented by X¹ and X² are alkoxy radicals.

4. A surface treating agent comprising the perfluoropolyether-modified aminosilane of any one of claims 1 to 3 and/or a partial hydrolytic condensate thereof as an active ingredient in a polar solvent.

5. An article having a cured coating comprising the perfluoropolyether-modified aminosilane of any one of claims 1 to 3 and/or a partial hydrolytic condensate thereof.

6. The article of claim 5 which is a sanitary ware, glazing in transport vehicles, glass in the general industry, glassware, building material or telephone booth.

## Patentansprüche

1. Perfluorpolyether-modifiziertes Aminosilan der folgenden Formel (1): 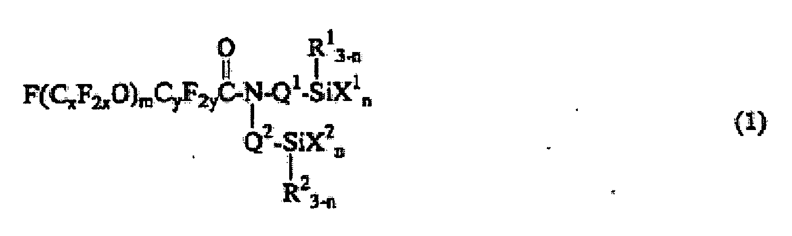 worin X¹ und X² jeweils ein hydrolysierbarer Rest sind, gewählt aus der Gruppe, bestehend aus Alkoxyresten mit 1 bis 4 Kohlenstoffatomen, Oxyalkoxyresten mit 2 bis 4 Kohlenstoffatomen, Acyloxyresten mit 2 bis 4 Kohlenstoffatomen, Alkenyloxyresten mit 2 bis 4 Kohlenstoffatomen und Halogenresten, R¹ und R² jeweils ein Alkylrest mit 1 bis 6 Kohlenstoffatomen oder Phenylrest sind, Q¹ und Q² jeweils ein zweiwertiger organischer Alkylenrest mit 1 bis 5 Kohlenstoffatomen sind, m eine ganze Zahl von 3 bis 5 ist, n gleich 2 oder 3 ist, x und y jeweils eine ganze Zahl von 1 bis 3 sind.

2. Perfluorpolyether-modifiziertes Aminosilan nach Anspruch 1, wobei die Perfluorpolyethergruppe die folgende Formel (2) besitzt: 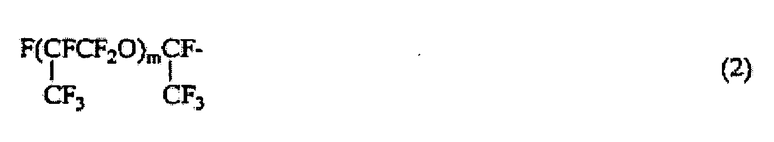 worin m wie oben definiert ist.

3. Perfluorpolyether-modifiziertes Aminosilan nach Anspruch 1 oder 2, wobei die durch X¹ und X² wiedergegebenen, hydrolysierbaren Reste Alkoxyreste sind.

4. Oberflächenbehandlungsmittel, umfassend das Perfluorpolyether-modifizierte Aminosilan gemäß mindestens einem der Ansprüche 1 bis 3 und/oder ein partielles hydrolytisches Kondensat davon als aktiven Bestandteil in einem polaren Lösungsmittel.

5. Gegenstand mit einer gehärteten Beschichtung, umfassend das Perfluorpolyether-modifizierte Aminosilan gemäß mindestens einem der Ansprüche 1 bis 3 und/oder ein partielles hydrolytisches Kondensat davon.

6. Gegenstand nach Anspruch 5, bei dem es sich um ein Sanitärerzeugnis, eine Verglasung in Transportfahrzeugen, Glas in der allgemeinen Industrie, Glasware, Baumaterial oder Telefonzelle handelt.

## Revendications

1. Aminosilane modifié par perfluoropolyéther, de formule (1) suivante : 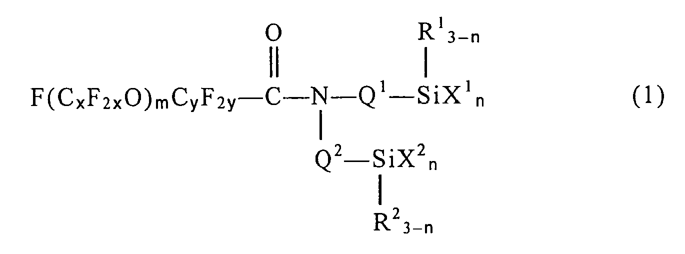 dans laquelle
- X¹ et X² représentent chacun un groupe hydrolysable choisi dans l'ensemble formé par les groupes alcoxy comportant de 1 à 4 atomes de carbone, oxyalcoxy comportant de 2 à 4 atomes de carbone, acyloxy comportant de 2 à 4 atomes de carbone et alcényloxy comportant de 2 à 4 atomes de carbone, et les atomes d'halogène,
- R¹ et R² représentent chacun un groupe alkyle comportant de 1 à 6 atomes de carbone ou un groupe phényle,
- Q¹ et Q² représentent chacun un groupe alkylène organique divalent comportant de 1 à 5 atomes de carbone,
- l'indice m est un nombre entier valant de 3 à 5,
- l'indice n vaut 2 ou 3,
- et les indices x et y sont chacun un nombre entier valant de 1 à 3.

2. Aminosilane modifié par perfluoropolyéther, conforme à la revendication 1, dans lequel le fragment perfluoropolyéther présente la formule (2) suivante : 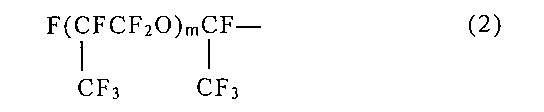 dans laquelle l'indice m a la définition indiquée ci-dessus.

3. Aminosilane modifié par perfluoropolyéther, conforme à la revendication 1 ou 2, dans lequel les groupes hydrolysables représentés par X¹ et X² sont des groupes alcoxy.

4. Agent de traitement de surface, comprenant un aminosilane modifié par perfluoropolyéther, conforme à l'une des revendications 1 à 3, et/ou un produit de condensation obtenu par hydrolyse partielle d'un tel aminosilane, en tant qu'ingrédient actif, dans un solvant polaire.

5. Article portant un revêtement durci comprenant un aminosilane modifié par perfluoropolyéther, conforme à l'une des revendications 1 à 3, et/ou un produit de condensation obtenu par hydrolyse partielle d'un tel aminosilane.

6. Article conforme à la revendication 5, qui est un article sanitaire, un vitrage de véhicule de transport, un article en verre pour l'industrie en général, un article de verrerie, un matériau de construction ou une cabine téléphonique.
